# EUROPÄISCHE PATENTSCHRIFT

(11) **EP 0 509 129 B1**
(45) Veröffentlichungstag und Bekanntmachung des Hinweises auf die Patenterteilung: **23.10.1996**
(21) Anmeldenummer: 91112991.4
(22) Anmeldetag: 02.08.1991
(51) Int. Cl.: H04N 17/02, H04N 17/04

(54) **Verfahren zum automatischen Abgleich und zur Funktionsprüfung von Farbbausteinmodulen**
Method for automatically adjusting and testing functions of colour component modules
Méthode de réglage automatique et de test des fonctions des modules des composants couleur

(30) Priorität: 18.04.1991 DE 4112645
(43) Veröffentlichungstag der Anmeldung: 21.10.1992
(73) Patentinhaber: GRUNDIG E.M.V. Elektro-Mechanische Versuchsanstalt Max Grundig GmbH & Co. KG, D-90762 Fürth (DE)
(72) Erfinder: Weyde, Johannes, Grundig E.M.V., Max Grundig, D-8510 Fuerth (DE); Steltner, Günter, Grundig E.M.V., Max Grundig, D-8510 Fuerth (DE)

(56) Entgegenhaltungen:
- EP-A- 0 204 112
- DE-B- 2 049 259
- US-A- 3 962 722
- FERNSEH UND KINO TECHNIK Bd. 45, Nr. 2, Februar 1991, BERLIN DE Seiten 87 - 90 H.IBL 'TIMINGANALYSE IM GEMISCHTEN PAL-/KOMPONENTENSTUDIO'
- FUNKSCHAU Bd. 58, Nr. 5, Februar 1986, MUNCHEN DE Seiten 40 - 42 D.BEISSE 'GEOMETRIEABGLEICH MIT KAMERA UND COMPUTER'

## Beschreibung

Die Erfindung betrifft ein Verfahren zum automatischen Abgleich und zur Funktionsprüfung von Farbbausteinmodulen gemäß dem Oberbegriff des Patentanspruchs 1.

Bei der Produktion von Videogeräten ist es notwendig, die einzelnen Funktionsgruppen auf ihre Funktionsfähigkeit hin zu prüfen. Bei einzelnen Funktionsbausteinen, wie beispielsweise dem Farbbaustein, ist neben der Prüfung auf Funktionsfähigkeit auch ein Abgleich für jeden Baustein nötig, wodurch fertigungs- und bauteilebedingte Streuungen der Betriebsparameter kompensiert werden.

Zur Bestimmung der Parameter und zu ihrer Korrektur werden nach bekanntem Stand der Technik verschiedene Geräte eingesetzt, die bestimmte Prüffunktionen und dgl. erfüllen. Die verwendeten Geräte für Testbilderzeugung, Meßgeräte und Anzeigeeinheiten sind meist nicht für einen speziellen Anwendungsfall konzipiert, sondern die Meßanordnung wird aus den Einzelgeräten nach Bedarf zusammengestellt. Derartige Anordnungen bieten zwar den Vorteil, daß sie vielfach einsetzbar sind, schließt aber eine optimale Arbeitsweise im einzelnen Anwendungsfall nahezu aus. Dies gilt sowohl in Bezug auf die Arbeitsgeschwindigkeit, als auch auf das Zusammenwirken der einzelnen Geräte. Insbesondere werden für den Meßvorgang und den Abgleichvorgang mehrere Arbeitsgänge benötigt.

Es ist daher Aufgabe der Erfindung, ein Verfahren zur Funktionsprüfung und zum Abgleich für Farbbausteinmodule anzugeben, das eine höhere Arbeitsgeschwindigkeit zuläßt.

Aus der deutschen Auslegeschrift DE-B 2 049 259 ist ein System zur selbsttätigen Prüfung von Video-Studiogeräten bekannt, bei dem in die Videosignale der zu prüfenden Geräte vorzugsweise während der vertikalen Austastlücke Testsignale eingeblendet werden. Die den Testsignalen entsprechenden Ausgangssignale werden ausgewertet, um die Übertragungseigenschaften der Videogeräte zu bestimmen und mit vorgegebenen Grenzwerten zu vergleichen.

Aus der EP-A 0 204 112 ist ein System zum automatischen Abgleich von Bauelementen in Fernsehgeräten bekannt, bei dem mittels einer Recheneinheit eine Sequenz von Bildern erzeugt wird, die auf dem abzugleichenden Fernsehgerät dargestellt werden. Diese dargestellten Bilder werden mit einem Scanner erfaßt und von der Recheneinheit ausgewertet. Die Recheneinheit steuert ferner in Abhängigkeit des Auswerteergebnisses Abgleichelemente für die abzugleichenden Bauelemente an.

Aus der US-A-3962722 ist ein Verfahren zum Prüfen und Einrichten von Farbfunktionen eines Farbfernsehempfängers bekannt, bei dem auf dem Bildschirm des Empfängers ein vorgegebenes Bildmuster dargestellt wird, das mittels Photozellen abgetastet wird. Die Signale der Photozellen werden in einer analogen Schaltungsanordnung ausgewertet. In Abhängigkeit des Auswerteergebnisses werden mittels einer Schrittmotorsteuerung und entsprechender Schrittmotoren Abgleichelemente angesteuert.

Diese Aufgabe wird gemäß der Erfindung gemäß Anspruch 1 gelöst, indem die Abgleichwerte direkt und automatisch aus den Meßergebnissen gebildet werden, wobei die Meßanordnung zur Erhöhung der Arbeitsgeschwindigkeit nicht ein ganzes Testbild, sondern nur Meßdaten einzelner Bildpunkte auswertet. Dieser Auswertung folgt die Ansteuerung von Abgleichelementen. Die Abgleichelemente werden einzeln angesteuert, wobei die Position durch eine Koordinatensteuerung festgelegt wird.

Die Initialisierung des Meßvorgangs erfolgt durch ein Triggersignal, das aus dem Videosignal gewonnen wird. In einem Meßvorgang wird eine vorbestimmte Anzahl von Meßwerten aufgenommen und in einem Speicher des Videomeßsystems abgelegt. Die abgelegten Meßwerte werden dann an eine Rechnereinheit übertragen, in der eine Auswahl von Meßwerten bewertet wird. Aus dieser Bewertung werden die Stellgrößen für das oder die Abgleichelemente gewonnen.

Das der Messung zugrundegelegte Videosignal wird in einem in der erfindungsgemäßen Anordnung enthaltenen Videosignalgenerator erzeugt. In diesem Videosignalgenerator werden in bekannter Weise Testmuster erzeugt, die eine möglichst gute Auswertung durch das Videomeßsystem und die Rechnereinheit zulassen.

Die Auswahl und Ansteuerung des Videosignalgenerators erfolgt in einer vorteilhaften Ausgestaltung der Erfindung über eine Fernbedieneinheit. Eine weitere vorteilhafte Ausgestaltung der Erfindung beinhaltet einen an die Rechnereinheit angeschlossenen Drucker, mit dem der Meß- und Abgleichvorgang dokumentiert wird.

Weiterhin kann das Verfahren gemäß der Erfindung durch Benutzung eines Zwischenfrequenzbausteins erweitert werden. Dieser demoduliert die im Videogenerator erzeugten Videosignale, wobei gegebenenfalls Verzerrungen, die in einem realen Fernsehsystem enthalten sind, hinzugefügt werden können.

Die Auswertung der Meßergebnisse erfolgt durch Vergleiche dieser gemessenen Werte mit in einer Tabelle abgelegten Referenzwerten. Aus der Differenz von Meß- und Referenzwert wird das Stellsignal für den Abgleich erzeugt, wobei der Abgleich innerhalb vorgebbarer Grenzwerte erfolgt.

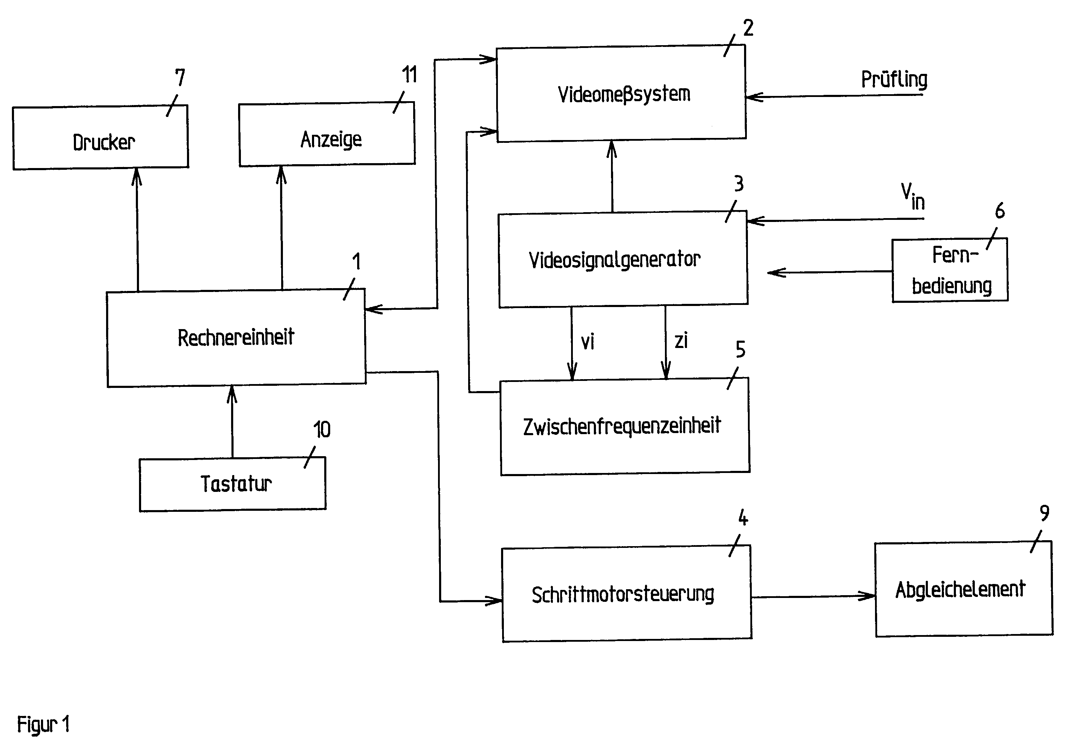

Im folgenen wird die Erfindung an Hand eines Ausführungsbeispieles gemäß dem Blockschaltbild nach Figur 1 erläutert.

Das erfindungsgemäße Verfahren besteht aus einer Rechnereinheit 1, die mit einer Tastatur 10 zur Eingabe von Benutzerbefehlen oder- daten und einer Anzeigeneinheit 11 verbunden ist. Eine weitere Verbindung besteht zu einem Drucker 7. Die Anordnung enthält weiterhin ein Videomeßsystem 2, einen Videosignalgenerator 3, eine Schrittmotorsteuerung 4 und eine Zwischenfrequenzeinheit 5, sowie eine Fernbedienung 6. Das Videomeßsystem 2 ist über eine bidirektionale Datenleitung mit der Rechnereinheit 1 verbunden, außerdem führt eine Verbindung von der Zwischenfrequenzeinheit 5 zu diesem Videomeßsystem 2. Vom Videosignalgenerator 3 führt eine Verbindung zum Videomeßsystem 2 und zwei Verbindungen Vi und Zi zur Zwischenfrequenzeinheit 5. Weiterhin hat der Videosignalgenerator 3 einen Eingangsanschluß für ein externes Videosignal Vin und eine Verbindung zu einem Fernbedienteil 6. Die Schrittmotorsteuerung 4 ist mit der Rechnereinheit 1 verbunden und mit dem Abgleichelement 9, mit dem der Abgleich des Prüflings durchgeführt wird.

Die Meßanschlüsse des Prüflings führen, wie in Figur 1 durch eine Verbindungslinie angedeutet, zum Videomeßsystem 2.
Mit Hilfe der Rechnereinheit 1 werden alle Meß- und Einstellfunktionen rechnergesteuert. Über die Tastatur 10 können vom Bediener verschiedene Meß- und Einstellfunktionen abgerufen werden und an einer Anzeigeeinheit 11 dargestellt werden. Der Bediener kann über die Tastatur der Rechnereinheit die Grenz-, Statistik- und Einstellwerte, sowie die Prüfschritte je nach Anwendung frei programmieren. Durch den Anschluß des Druckers 7 an die Rechnereinheit 1 können die Meß- und Abgleichwerte protokolliert werden.

Die zur Messung und damit zur Bildung der Abgleichwerte nötigen Bildmuster werden im Videosignalgenerator 3 erzeugt. Mit diesem Videosignalgenerator 3 können Bildmuster verschiedener Fernsehnormen erzeugt werden bzw. externe Videosignale über die Signalleitung Vin zugeführt werden, die dann unverändert oder verändert durchgeschaltet werden.

Die Bildmuster werden entweder direkt oder über die Zwischenfrequenzstufe dem Videomeßsystem zugeführt. Die Zwischenfrequenzstufe ist auf die für die Prüfung erforderliche Norm einstellbar.
In ihr wird das Videosignal Zi demoduliert, das Videosignal Vi wird gegebenenfalls analog zu den im Fernsehsignal enthaltenen Verzerrungen verzerrt, um eine realistische Messauswertung zu gewährleisten. Der Meßvorgang erfolgt im Videomeßsystem 2, an das der zu prüfende bzw. der abzugleichende Farbbaustein angeschlossen ist. Der Prüfvorgang wird durch ein Triggersignal, das aus dem Videosignal erhalten wird, gestartet. Als Triggersignal können verschiedene Signale definiert werden. Beispielsweise kann der Horizontal-oder Vertikalsynchronisationsimpuls, aber auch ein oder mehrere Bildpunkte als Startpunkt für die Meßwertaufnahme definiert werden.

Weiterhin können mit Hilfe der Rechnereinheit 1 die Meßpunkte definiert werden, die für die Berechnung der Abgleichwerte aufgenommen und ausgewertet werden. Durch die Rechnereinheit 1 werden über die Eingabetastatur 10 auch die Abtastfrequenz, die auszuwertende Zeilennummer bzw. Segmentnummer, sowie die Anzahl der Mittelwertbildungen von Meßwerten durch den Bediener festgelegt.

Nach einem Triggerimpuls wird eine vorgegebene Anzahl von Meßwerten gemessen und in den Speicher des Videomeßsystems 2 übernommen. Der Speicherinhalt wird dann an die Rechnereinheit 1 übertragen und es werden ein oder mehrere Meßwerte ausgewertet. Diese Auswertung erfolgt durch Vergleich der Meßwerte mit vorgegebenen Referenzwerten. Aus der Differenz der Werte wird die Stellgröße für das Abgleichelement gewonnen.

Mit den gewonnenen Stellwerten wird von der Rechnereinheit 1 die Schrittmotorsteuerung 4 angesteuert. In der Schrittmotorsteuerung 4 werden die Stell- oder Abgleichwerte und die Positionsdaten für das oder die Abgleichelemente 9 erzeugt. Die in der Schrittmotorsteuerung 4 enthaltenen bzw. angesteuerten Abgleichwerkzeuge werden durch eine Koordinatensteuerung in die richtige Position zum einzelnen Abgleichelement gebracht. Durch diese Koordinatensteuerung wird eine Umstellung auf verschiedene Farbbausteinmodule vereinfacht und somit die Flexibilität des Systems erhöht.

Eine Vereinfachung der Bedienung wird durch eine Fernbedieneinheit 6 für den Videosignalgenerator erreicht. Durch diese Einheit sind verschiedene Bedienerfunktionen, beispielsweise die Auswahl eines bestimmten Farbbildmusters für die Prüfung, aus räumlich vom Prüf- und Abgleichsystem entfernter Position möglich.

## Patentansprüche

1. Verfahren zum automatischen Abgleich und zur Funktionsprüfung von Farbbausteinmodulen, das eine Rechnereinheit (1) zur Steuerung der Meß- und Einstellfunktionen, ein Videomeßsystem (2) zur Aufnahme und Verarbeitung von Meßdaten, eine Eingabeeinheit (10), einen Videosignalgenerator (3) zur Erzeugung farbiger Bildmuster und eine Schrittmotorsteuerung (4) mit Abgleichwerkzeugen zur Ansteuerung von Abgleichelementen (5) benutzt, **dadurch gekennzeichnet**, daß die vom Videomeßsystem (2) ermittelten Meßwerte der Rechnereinheit (1) zugeführt werden, welche ein oder mehrere Abgleichwerte durch Auswertung der Meßwerte einzeln auswählbarer Bildpunkte ermittelt, wobei die Auswahl der auszuwertenden Bildpunkte mittels der Rechnereinheit (1) und der Eingabeeinheit (10) erfolgt,
die Meßwerterfassung durch ein aus dem Videosignal des Videosignalgenerators (3) gewonnenes Triggersignal initialisiert wird und eine vorbestimmbare Anzahl von Meßwerten in einen Speicher des Videomeßsystems (2) eingelesen und anschließend an die Rechnereinheit (1) übertragen werden, in der ein oder mehrere Meßwerte bewertet wird und daraus die Stellgröße für das jeweilige Abgleichelement gewonnen wird, und
die Rechnereinheit (1) mit einer Koordinatensteuerung verbunden ist, welche die Abgleichwerkzeuge durch Ansteuerung der Schrittmotorensteuerung in die richtige Position zu den einzelnen Abgleichelementen bringt.

2. Verfahren nach Anspruch 1, **dadurch gekennzeichnet**, daß der Videosignalgenerator (3) von einer Fernbedieneinheit (6) aus ansteuerbar ist.

3. Verfahren nach Anspruch 1 oder Anspruch 2, **dadurch gekennzeichnet**, daß die Meßergebnisse zur Dokumentation auf einem mit der Rechnereinheit (1) verbundenen Drucker (7) ausgegeben wird.

4. Verfahren nach einem oder mehreren der Ansprüche 1 bis 3, **dadurch gekennzeichnet**, daß das Verfahren einen Zwischenfrequenz-Baustein (8) benutzt, mit dem externe Videosignale oder im Videosignalgenerator (3) erzeugte Signale demoduliert und entzerrt werden.

5. Verfahren nach einem oder mehreren der Ansprüche 1 bis 4, **dadurch gekennzeichnet**, daß in einem Speicherbereich der Rechnereinheit (1) Referenzwerte abgespeichert sind, und daß Referenzwert und Meßwert miteinander verglichen werden und die Abgleichwerte aus der Differenz von Meß- und Referenzwert erzeugt werden.

## Claims

1. Method for the automatic alignment and for the functional testing of colour modules, which uses a computer unit (1) to control the measurement and adjustment functions, a video measurement system (2) for recording and processing the measurement data, an input unit (10), a video-signal generator (3) for generating colour picture patterns and a stepping motor control (4) with alignment tools for actuating the alignment elements (5),
characterized in that
the measured values determined by the video measurement system (2) are fed to the computer unit (1) which determines one or more alignment values by evaluating the measured values of individually selectable picture points, the picture points to be evaluated being selected by means of the computer unit (1) and the input unit (10),
the measured value determination is initialized by a trigger signal obtained from the video signal of the video-signal generator (3) and a predetermined number of measured values is fed into a memory of the video measurement system (2) and then transmitted to the computer unit (1), in which one or more measured values is assessed and the manipulated variable is obtained therefrom for the alignment element concerned, and
the computer unit (1) is linked to a coordinate control which sets the alignment tools to the correct position for the individual alignment elements by actuating the stepping motor control.

2. Method according to Claim 1, characterized in that the video-signal generator (3) can be actuated from a remote control unit (6).

3. Method according to Claim 1 or Claim 2, characterized in that the measurement results are outputted on a printer (7) linked to the computer unit (1) for the purpose of documentation.

4. Method according to one or more of Claims 1 to 3, characterized in that the method utilizes an intermediate-frequency component (8) with which external video signals or signals generated in the video-signal generator (3) are demodulated and equalized.

5. Method according to one or more of Claims 1 to 4, characterized in that reference values are stored in a memory area of the computer unit (1) and in that reference value and measurement value are compared with one another and the alignment values are generated from the difference between measurement value and reference value.

## Revendications

1. Procédé d'équilibrage automatique et de contrôle du fonctionnement de modules de traitement des couleurs, qui se sert d'une unité formant ordinateur (1) pour commander les fonctions de mesure et de réglage, d'unsystème de mesure vidéo (2) servant à recevoir et traiter des données de mesure, d'une unité d'entrée (10), d'un générateur de signaux vidéo (3) servant à produire des mires colorées, et d'une unité (4) de commande d'un moteur pas-à-pas exécutant une commande, qui réalise un équilibrage, d'éléments d'équilibrage (5),
caractérisé en ce que les valeurs de mesure, déterminées par le système de mesure vidéo (2), sont envoyées à l'unité formant ordinateur (1) qui détermine une ou plusieurs valeurs d'équilibrage par exploitation des valeurs de mesure de points d'image pouvant être sélectionnés individuellement, la sélection des points d'image devant être exploités s'effectuant à l'aide de l'unité formant ordinateur (1) et de l'unité d'entrée (10),
la détection des valeurs de mesure est initialisée au moyen d'un signal de déclenchement obtenu à partir du signal vidéo du générateur de signaux vidéo et un nombre pouvant être prédéterminé de valeurs de mesure sont mémorisées dans une mémoire du système de mesure vidéo (2) et ensuite sont transmises à l'unité formant ordinateur (1), dans laquelle une ou plusieurs valeurs de mesure sont évaluées et la grandeur de réglage est obtenue, à partir de là, pour l'élément d'équilibrage respectif, et
l'unité formant ordinateur (1) est reliée à une unité de commande de coordonnées, qui, sous la commande de l'unité de commande à moteur pas-à-pas, amène les outils d'équilibrage dans la position correcte par rapport aux différents éléments d'équilibrage.

2. Procédé selon la revendication 1, caractérisé en ce que le générateur de signaux vidéo (3) peut être commandé à partir d'une unité de télécommande (6).

3. Procédé selon la revendication 1 ou 2, caractérisé en ce que les résultats de mesure sont délivrés à des fins de documentation, à une imprimante (7) reliée à l'unité formant ordinateur (1).

4. Procédé selon une ou plusieurs des revendications 1 à 3, caractérisé en ce que le procédé utilise un module à fréquence intermédiaire (8), au moyen duquel des signaux vidéo externes ou des signaux produits dans le générateur de signaux vidéo (3) sont démodulés et leurs distorsions sont supprimées.

5. Procédé selon une ou plusieurs des revendications 1 à 4, caractérisé en ce que des valeurs de référence sont mémorisées dans une zone de mémoire de l'unité formant ordinateur (1) et qu'une valeur de référence et une valeur de mesure sont comparées entre elles et que les valeurs d'équilibrage sont produites à partir de la différence entre la valeur de mesure et la valeur de référence.
